# EUROPEAN PATENT APPLICATION

(11) **EP 1 607 302 A1**
(43) Date of publication of application: **21.12.2005**
(21) Application number: 04014348.9
(22) Date of filing: 18.06.2004
(51) Int. Cl.: B62B 17/08, B62B 13/04

(54) **Sled with a braking mechanism**

(71) Applicant: Su, Chung-Hsiu, Lu-Chu Hsiang, Kaohsiung Hsien (TW)
(72) Inventor: Su, Chung-Hsiu, Lu-Chu Hsiang, Kaohsiung Hsien (TW)
(74) Representative: Ebner von Eschenbach, Jennifer

(57) **Abstract**

A sled includes an elongated board (1) having opposite front and rear ends (101, 102), a stand (2) disposed adjacent to the front end (101) of the board (1), standing upright therefrom, and having a top end (201), a handle (20) connected to the top end (201) of the stand (2), and a braking mechanism (4) including an operating unit (42') mounted movably on the handle (20), a connecting unit (43') connected to the operating unit (42'), and a braking unit (41') disposed adjacent to the rear end (101) of the board (1) and pivotable relative to the board (1) from a non-braking position to a braking position, in which the braking unit (41') is in frictional contact with the ground. The braking unit (41') is connected to the connecting unit (43') so as to be actuated to move to the braking position when the operating unit is operated.

## Description

This invention relates to a sled, more particularly to a sled with a braking mechanism for sledding over grass or snow,

Conventional skis or sleds normally require the user to build up his or her skill in order to slow down the speed, As such, there is a need to provide a braking mechanism that can be easily operated to control the speed of skis or sleds.

The object of the present invention is to provide a sled with a braking mechanism that is capable of overcoming the aforesaid drawback associated with the prior art.

According to this invention, there is provided a sled that comprises: an elongated board having opposite front and rear ends; a stand disposed adjacent to the front end of the board, standing upright therefrom, and having a top end; a handle connected to the top end of the stand; and a braking mechanism including an operating unit mounted movably on the handle, a connecting unit connected to the operating unit, and a braking unit disposed adjacent to the rear end of the board and pivotable relative to the board from a non-braking position to a braking position, in which the braking unit is in frictional contact with the ground surface. The braking unit is connected to the connecting unit so as to be actuated to move to the braking position by the operating unit when the operating unit is operated.

Other features and advantages of the present invention will become apparent in the following detailed description of the preferred embodiments of the invention, with reference to the accompanying drawings, in which:
Fig. 1 is a perspective view of the first preferred embodiment of a sled according to this invention;
Fig. 2 is an exploded perspective view of the first preferred embodiment;
Fig. 3 is a sectional view of a board of the sled of the first preferred embodiment;
Fig. 4 is a fragmentary schematic partly sectional view to illustrate how a post is adjusted relative to a board of the first preferred embodiment;
Figs. 5 and 6 are fragmentary schematic partly sectional views to illustrate how a braking unit is operated to pivot relative to the board of the first preferred embodiment;
Fig. 7 is a fragmentary partly cutaway perspective view to illustrate a disassembled state of a board of the second preferred embodiment of a sled according to this invention;
Fig. 8 is a sectional view to illustrate the board of Fig. 7 in an assembled state;
Fig. 9 is a fragmentary perspective view to illustrate how a post is adjusted relative to a board of the third preferred embodiment of a sled according to this invention; and
Fig. 10 is a fragmentary schematic side view to illustrate how the post is adjusted relative to the board of the third preferred embodiment.

Before the present invention is described in greater detail, it should be noted that same reference numerals have been used to denote like elements throughout the specification.

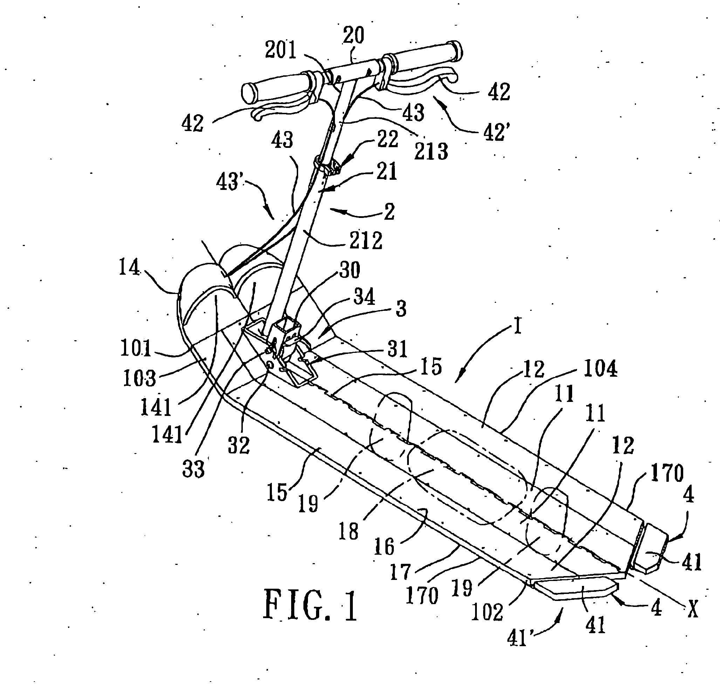

Figs. 1 to 4 illustrate the first preferred embodiment of a sled according to the present invention.

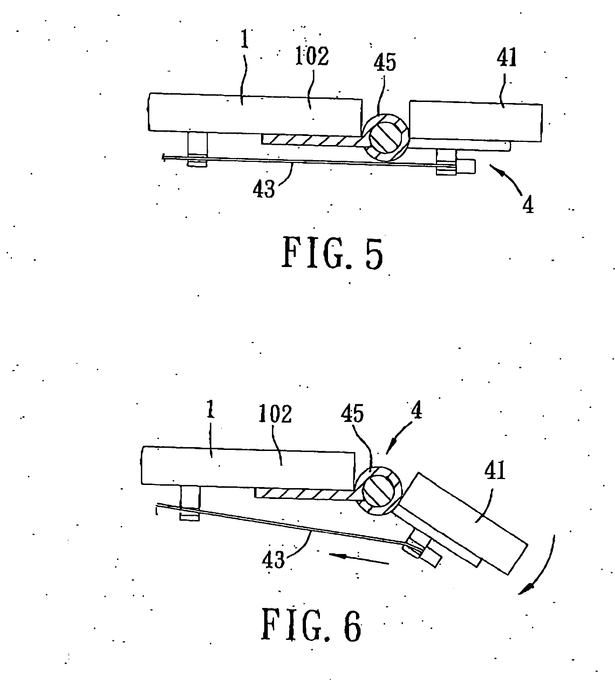

The sled includes: an elongated board 1 having opposite front and rear ends 101, 102; a stand 2 disposed adjacent to the front end 101 of the board 1, standing upright therefrom, and having a top end 201; a handle 20 connected to the top end 201 of the stand 2; and a braking mechanism 4 including an operating unit 42' mounted movably on the handle 20, a connecting unit 43' connected to the operating unit 42', and a braking unit 41' disposed adjacent to the rear end 102 of the board 1 and pivotable relative to the board 1 from a non-braking position (see Fig. 5) to a braking position (see Fig. 6), in which the braking unit 41' is in frictional contact with the ground. The braking unit 41' is connected to the connecting unit 43' so as to be actuated to move to the braking position when the operating unit 42' is operated.

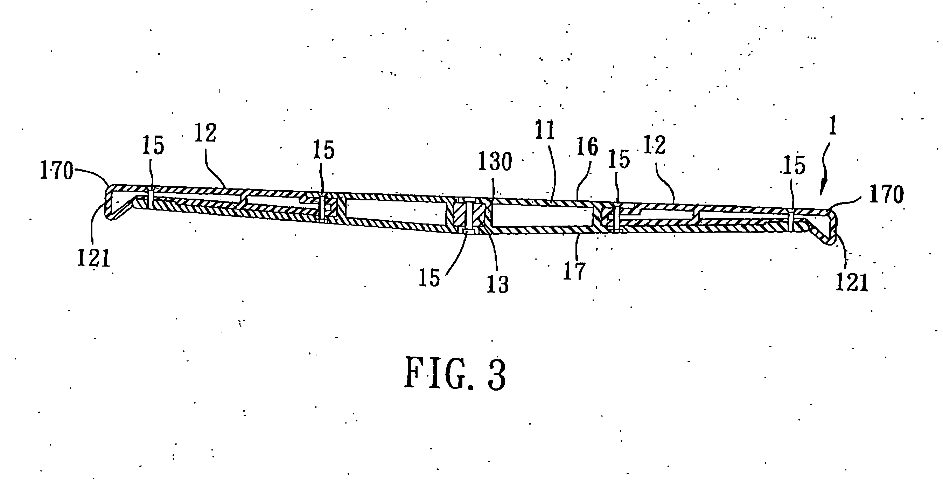

In this embodiment, the board 1 has a bottom surface 17 and two opposite sides 170 extending between the front and rear ends 101, 102, and defines a centerline (X) (see Fig. 2) between the opposite sides 170. The bottom surface 17 of the board 1 is slightly inclined upwardly from the centerline (X) to each of the opposite sides 170 (see Fig. 3) . The board 1 is formed with two opposite side protrusions 121 that protrude downwardly and respectively from the opposite sides 170 of the board 1 so that one of the side protrusions 121 is disposed to be in sliding contact with the ground when the board 1 is inclined downwardly toward the respective one of the opposite sides 170 of the board 1. The board 1 further has an upper surface 16 opposite to the bottom surface 17, and a sitting pad 18 and front and rear stepping pads 19 which are attached to the upper surface 16 of the board 1.

The board 1 includes a middle part 11' with two opposite sides, and two opposite side parts 12 connected respectively to the opposite sides of the middle part 11' in a wedging manner. Each of the side parts 12 def ines a respective one of the opposite sides 170 of the board 1. The middle part 11' includes two complementary portions 11 meshing together in a wedging manner, and cooperatively defining a central chamber 130 that extends along the centerline (X). A reinforcing beam 13 is mounted in the central chamber 130. A plurality of fasteners 15 extend through the middle part 11', the side parts 12, and the reinforcing beam 13 for securing the complementary portions 11 of the middle part 11' together and for securing the side parts 12 of the board 1 to the middle part 11' of the board 1.

The board 1 has a front segment 103 extending rearwardly from the front end 101 of the board 1, and a flat segment 104 that extends -rearwardly from the front segment 103. The front segment 103 of the board 1 extends upwardly and inclinedly relative to the flat segment 104 of the board 1. A foot-receiving member 14 extends frontwardly from and is secured to the front end 101 of the board 1, and defines two foot-receiving recesses 141 for receiving the feet of the user.

The braking mechanism 4 further includes a hinge unit 45' that has two hinge members 45. The braking unit 41' includes two opposite braking plates 41 that are disposed respectively adjacent to the opposite sides 170 of the board 1 and that are pivoted to the rear end 102 of the board 1 through the hinge members 45, respectively, so as to be pivotable upwardly and downwardly relative to the board 1 and so as to permit movement of the braking unit 41' between the braking and non-braking positions. A biasing member 44 is connected to each of the hinge members 45 for urging the braking unit 41' to move to the braking position.

The operating unit 42' includes two operating levers 42 mounted movably on the handle 20. The connecting unit 43' including two cables 43, each of which is connected to and is tensioned between a respective one of the operating levers 42 and a respective one of the braking plates 41.

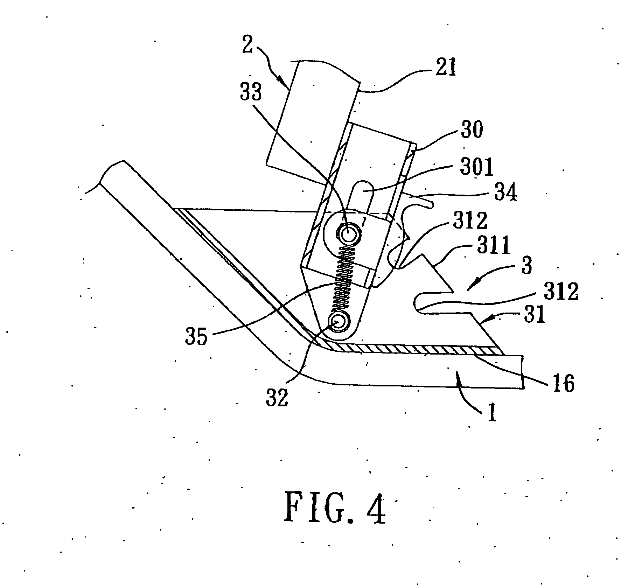

The flat segment 104 of the board 1 defines a horizontal plane. The stand 2 includes a post 21 connected to the handle 20 and defining the top end 201 of the stand 2, and a post-adjusting unit 3 that includes a pivot seat 31 secured to the board 1 and having two opposite top side ends 311 extending inclinedly and upwardly relative to the flat segment 104 of the board 1 and formed with pairs of retaining grooves 312 along the length of the top side ends 311. The post-adjusting unit 3 further includes a locking pin 33, and a connecting piece 30 secured to the post 21, pivoted to the pivot seat 31 so as to be pivotable together with the post 21 frontwardly and rearwardly relative to the board 1 and so as to permit angular adjustment of the post 21 relative to the horizontal plane, and formed with two opposite side slots 301 (only one is shown in Figs. 2 and 4) that are aligned with a selected one of the pairs of the retaining grooves 312. The locking pin 33 extends through the side slots 301, and is operable to move along the length of the side slots 301 between a locking position (see Fig. 4), in which the locking pin 33 extends through and engages releasably the selected one of the pairs of the retaining grooves 312, and an unlocking position (not shown), in which the locking pin 33 is moved out of and is disengaged from the selected one of the pairs of the retaining grooves 312. A pin-operating lever34 is connected to the locking pin 33 for facilitating movement of the locking pin 33 between the locking and unlocking positions.

The post-adjusting unit 3 further includes a pivot pin 32 and an urging member 35. The connecting piece 30 is pivoted to the pivot seat 31 through the pivot pin 32. The urging member 35 is connected to the pivot pin 32 and the locking pin 33 for urging the locking pin 33 to move to the locking position (see Fig. 4).

The post 21 includes a lower segment 212 and an upper segment 213 that is telescopically connected to the lower segment 212. The post-adjusting unit 3 further includes a quick-release fastener 22 mounted on the lower segment 212 of the post 3 for fastening the upper segment 213 to the lower segment 212 of the post 21.

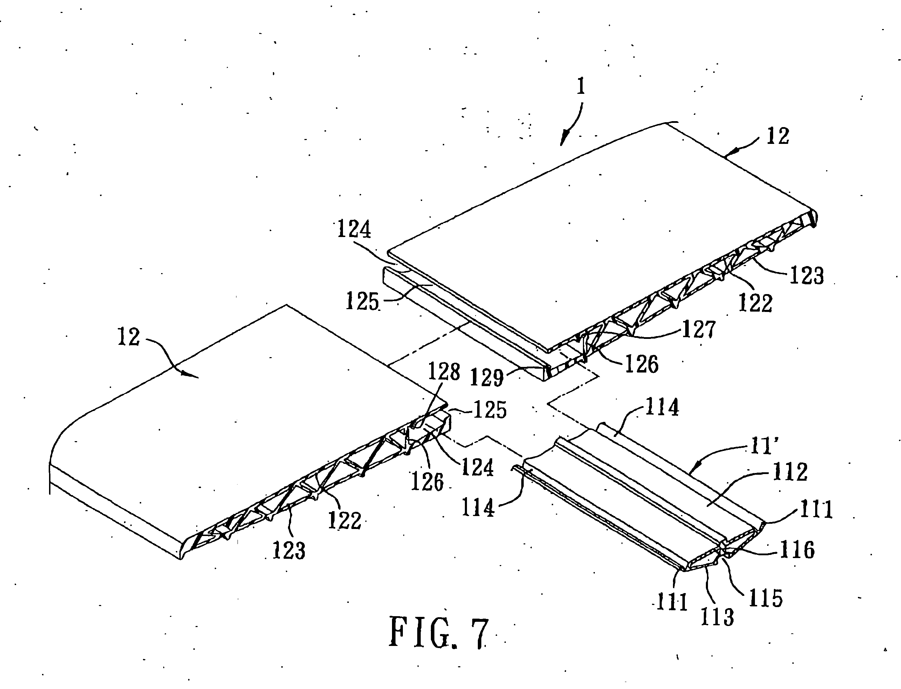

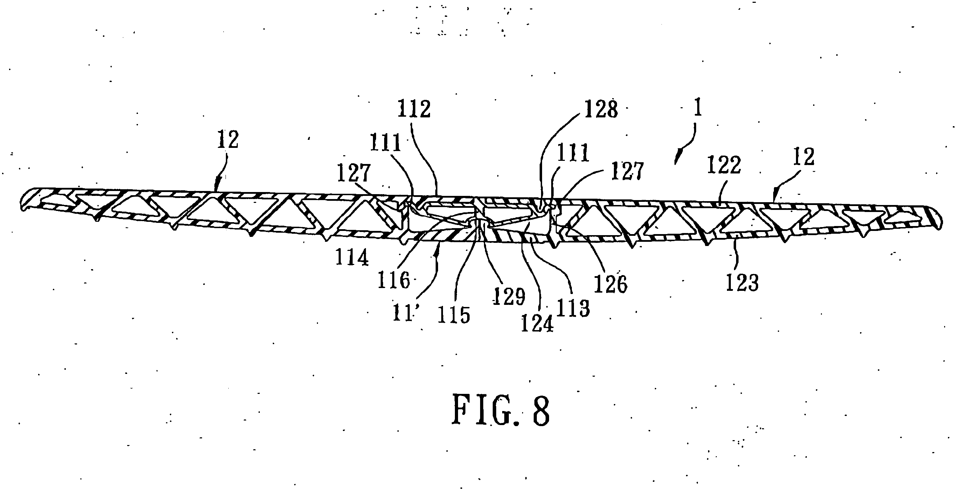

Figs. 7 and 8 illustrate the second preferred embodiment of the sled according to this invention. The sled of this embodiment differs from the previous embodiment in that the middle part 11' has two opposite side edges 111 and interconnected upper and lower plates 112, 113, and is formed with a lower groove 115 that is indented inwardly from the lower plate 113, and two opposite upper side grooves 114 that are indented inwardly from the upper plate 112 and that are disposed respectively adjacent to the side edges 111 of the middle part 11'. A central beam 116 interconnects the upper and lower plates 112, 113, and protrudes upwardly from the upper plate 112. Each of the side parts 12 has interconnected top and bottom plates 122, 123 that cooperatively define a gap 124 therebetween and a side opening 125 in spatial communication with the gap 124 for passage of a respective one of the side edges 111 of the middle part 11' therethrough and into the gap 124, and a connecting plate 126 disposed adjacent to the side opening 125, interconnecting the top and bottom plates 122, 123, and formed with a retaining recess 127. The top plate 122 of each of the side parts 12 is formed with a bottom protrusion 128 that protrudes downwardly therefrom into a respective one of the upper side grooves 114 in the middle part 11'. The bottom plate 123 of each of the side parts 12 is formed with a side protrusion 129 that protrudes upwardly therefrom into the lower groove 115 in the middle part 11'. Each of the side edges 111 of the middle part 11' extends into the retaining recess 127 in the connecting plate 126 of a respective one of the side parts 12. The top plate 122 of each of the side parts 12 abuts against the central beam 116.

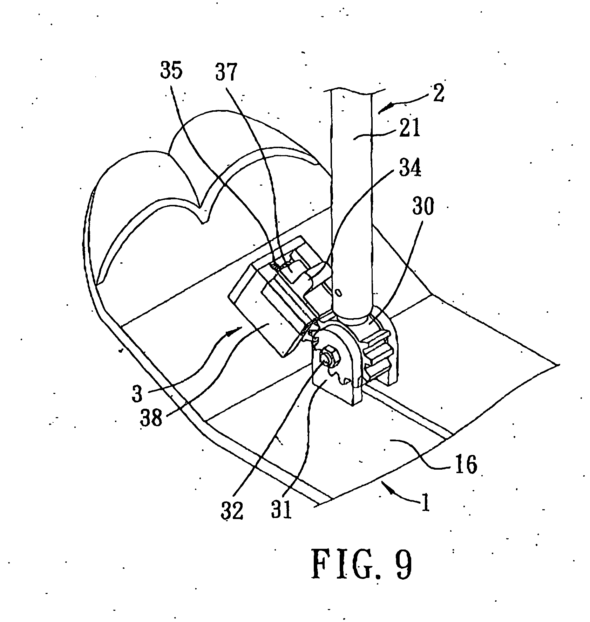

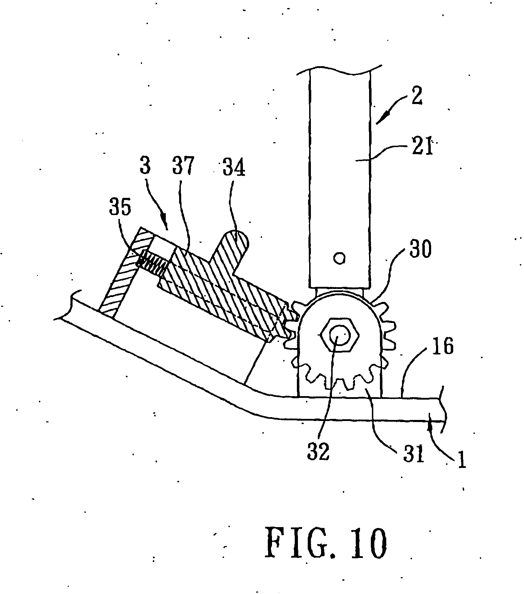

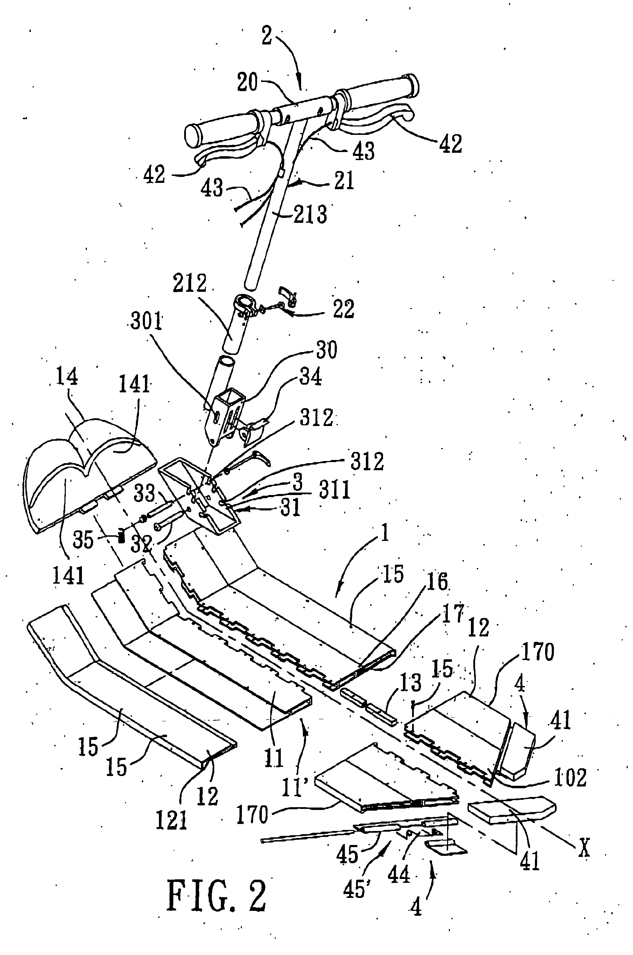

Figs. 9 and 10 illustrate the third preferred embodiment of the sled according to this invention. The sled of this embodiment differs from the first preferred embodiment in that the post-adjusting unit 3 includes a pivot seat 31 secured to the board 1, a connecting gear 30 secured to the post 1 and pivoted to the pivot seat 31 through a pivot pin 32 so as to be pivotable together with the post 21 frontwardly and rearwardly relative to the board 1 and so as to permit angular adj ustment of the post 21 relative to a horizontal plane defined by the board 1, and a toothed slider 37 mounted slidably on the board 1 and operable so as to slide relative to the connecting gear 30 between a locking position (see Fig. 10), in which the toothed slider 37 meshes with the connecting gear 30, and an unlocking position (not shown), in which the toothed slider 37 is disengaged from the connecting gear 30.

The toothed slider 37 is mounted slidably in a guiding seat 38 which is secured to the board 1. An urging member 35 is mounted in the guiding seat 38 and abuts against the toothed slider 3 7 for urging the toothed slider 37 to move to the locking position: A slider-operating lever 34 is connected to the toothed slider 37 for facilitating movement of the toothed slider 37 between the locking and unlocking positions.

With the inclusion of the braking mechanism 4 in the sled of this invention, the aforesaid drawback associated with the prior art can be eliminated.

## Claims

1. A sled **characterized by**:
an elongated board (1) having opposite front and rear ends (101, 102);
a stand (2) disposed adjacent to said front end (101) of said board (1), standing upright therefrom, and having a top end (201) ;
a handle (20) connected to said top end (201) of said stand (2); and
a braking mechanism (4) including an operating unit (42') mounted movably on said handle (20), a connecting unit (43') connected to said operating unit (42'), and a braking unit (41') disposed adjacent to said rear end (102) of said board (1) and pivotable relative to said board (1) from a non-braking position to a braking position, in which said braking unit (41') is in frictional contact with the ground, said braking unit (41') being connected to said connecting unit (43') so as to be actuated to move to said braking position when said operating unit (42') is operated.

2. The sled of claim 1, **characterized in that** said board (1) has a bottom surface (17) and two opposite sides (170) extending between said front and rear ends (101, 1012), and defines a centerline (X) between said opposite sides (170), said bottom surface (17) being slightly inclined upwardly from said centerline (X) to each of said opposite sides (170), said board (1) being formed with two opposite side protrusions (121) that protrude downwardly and respectively from said opposite sides (170) of said board (1) so that one of said side protrusions (121) is disposed to be in sliding contact with the ground surface when said board (1) is inclined downwardly toward the respective one of said opposite sides (170) of said board (1).

3. The sled of claim 2, further **characterized in that** said board (1) includes a middle part (11') with two opposite sides, and two opposite side parts (12) connected respectively to said opposite sides of said middle part (11') in a wedging manner, each of said side parts (12) defining a respective one of said opposite sides (170) of said board (1), said middle part (11') including two complementary portions (11) meshing together in a wedging manner.

4. The sled of claim 3, further **characterized in that** said complementary portions (11) of said middle part (11') cooperatively define a central chamber (130) extending along said centerline (X), said sled further comprising a reinforcing beam (13) that is mounted in said central chamber (130).

5. The sled of claim 4, further comprising a plurality of fasteners (15) extending through said middle part (11'), said side parts (12), and said reinforcing beam (13) for securing said complementary portions (11) of said middle part (11') together and for securing said side parts (12) of said board (1) to said middle part (11') of said board (1).

6. The sled of claim 1, **characterized in that** said board (1) has a front segment (103) extending rearwardly from said front end (101) of said board (1), and a flat segment (104) that extends rearwardly from said front segment (103), said front segment (103) of said board (1) extending upwardly and inclinedly relative to said flat segment (104) of said board (1).

7. The sled of claim 6, further comprising a foot-receiving member (14) that extends frontwardly from and that is secured to said front end (101) of said board (1), and that defines two foot-receiving recesses (141).

8. The sled of claim 2, further **characterized in that** said braking mechanism (4) further includes a hinge unit (45'), said braking unit (41') including two opposite braking plates (41) that are disposed respectively adjacent to said opposite sides (170) of said board (1) and that are pivoted to said rear end (102) of said board (1) through said hinge unit (45') so as to be pivotable upwardly and downwardly relative to said board (1).

9. The sled of claim 8, further **characterized in that** said operating unit (42') includes two operating levers (42) mounted movably on said handle (20), said connecting unit (43') including two cables (43), each of which is connected to and is tensionedbetween a respective one of said operating levers (42) and a respective one of said braking plates (41).

10. The sled of claim 1, **characterized in that** said board (1) defines a horizontal plane, said stand (2) including a post (21) connected to said handle (20) and defining said top end (201) of said stand (2), and a post-adjusting unit (3) that includes a pivot seat (31) secured to said board (1) and having two opposite top side ends (311) extending inclinedly and upwardly relative to said board (1) and formed with pairs of retaining grooves (312) along the length of said top side ends (311), said post-adjusting unit (3) further including a locking pin (33), and a connecting piece (30) secured to said post (21), pivoted to said pivot seat (31) so as to be pivotable together with said post (21) frontwardly and rearwardly relative to said board (1) and so as to permit angularadjustment of saidpost (21) relative to said horizontal plane, and formed with two opposite side slots (301) that are aligned with a selected one of said pairs of said retaining grooves (312), said locking pin (33) extending through said side slots (301) and being operable to move along the length of said side slots (301) between a locking position, in which said locking pin (33) extends through and engages releasably the selected one of said pairs of said retaining grooves (312), and an unlocking position, in which said locking pin (33) is moved out of and is disengaged from the selected one of said pairs of said retaining grooves (312).

11. The sled of claim 10, further **characterized in that** said post-adjusting unit (3) further includes a pivot pin (32) and an urging member (35), said connecting piece (30) being pivoted to said pivot seat (31) through said pivot pin (32), said urging member (35) being connected to said pivot pin (32) and said locking pin (33) for urging said locking pin (33) to move to said locking position.

12. The sled of claim 11, further **characterized in that** said post (21) includes a lower segment (212) and an upper segment (213) that is telescopically connected to said lower segment (212), said post-adjusting unit (3) further including a quick release fastener (22) mounted on said lower segment (212) of said post (21) for fastening said upper segment (213) to said lower segment (212) of said post (21),

13. The sled of claim 1, **characterized in that** said board (1) includes a middle part (11') extending between said front and rear ends (101, 102) of said board (1) and two opposite side parts (12), each of which defines a respective one of said opposite sides (170) of said board (1), said middle part (11') having two opposite side edges (111) and interconnected upper and lower plates (112, 113), and being formed with a lower groove (115) that is indented inwardly from said lower plate (113), and two opposite upper side grooves (114) that are indented inwardly from said upper plate (112) and that are disposed respectively adjacent to said side edges (111) of said middle part (11'), each of said side parts (12) having interconnected top and bottom plates (122, 123) that cooperatively define a gap (124) therebetween and a side opening (125) in spatial communication with said gap (124) for passage of a respective one of said side edges (111) of said middle part (11') therethrough and into said gap (124), and a connecting plate (126) disposed adjacent to said side opening (125), interconnecting said top and bottom plates (122, 123), and formed with a retaining recess (127), said top plate (122) of each of said side parts (12) being formed with a bottom protrusion (128) that protrudes downwardly therefrom into a respective one of said upper side grooves (114) in said middle part (11'), said bottom plate (123) of each of said side parts (12) being formed with a side protrusion (129) that protrudes upwardly therefrom into said lower groove (115) in said middle part (11'), each of said side edges (111) of saidmiddlepart (11') extendingintosaidretaining recess (127) in said connecting plate (126) of a respective one of said side parts (12).

14. The sled of claim 1, **characterized in that** said board (1) defines a horizontal plane, said stand (2) including a post (21) connected to said handle (20) and defining said top end (201) of said stand (2), and a post-adjusting unit (3) that includes a pivot seat (31) secured to said board (1), a connecting gear (30) secured to said post (21) and pivoted to said pivot seat (31) so as to be pivotable together with said post (21) frontwardly and rearwardly relative to said board (1) and so as to permit angular adjustment of said post (21) relative to said horizontal plane, and a toothed slider (37) mounted slidably on said board (1) and operable so as to slide relative to said connecting gear (30) between a locking position, in which said toothed slider (37) meshes with said connecting gear (30), and an unlocking position, in which said toothed slider (37) is disengaged from said connecting gear (30).

15. The sled of claim 14, further **characterized in that** said post-adjusting unit (30) further includes an urging member (35) for urging said toothed slider (37) to move to said locking position.
